# EUROPEAN PATENT APPLICATION

(11) **EP 2 575 392 A1**
(43) Date of publication of application: **03.04.2013**
(21) Application number: 11306226.9
(22) Date of filing: 27.09.2011
(51) Int. Cl.: H04W 36/00, H04W 84/04

(54) **Enhanced handover procedure in a E-UTRAN between Home eNodeBs (HeNBs) connected to a Home eNodeB Gateway (HeNB GW)**

(71) Applicant: Alcatel Lucent, 75007 Paris (FR)
(72) Inventor: Godin, Philippe, 91620 NOZAY (FR)
(74) Representative: El Manouni, Josiane

(57) **Abstract**

Embodiments of the present invention include a method for enhanced handover procedure in a Radio Access Network RAN architecture supporting Home Base Stations HBS with deployed Home Base Station Gateway HBS GW, said method comprising transmitting an indication from a HBS GW, to a source HBS connected to the HBS GW, in response to receiving a UE Context Release Request message with an explicit GW Context Release Indication, the indication indicating whether a User Equipment UE context stored in said HBS GW has been released or not.

## Description

The present invention generally relates to mobile communication networks and systems.

Detailed descriptions of mobile communication networks and systems can be found in the literature, such as in particular in Technical Specifications published by standardization bodies such as for example 3GPP (3^{rd} Generation Partnership Project).

In general, in such systems, a User Equipment (UE) has access, via a Radio Access Network (RAN), to a mobile operator's Core Network (CN).

An example of 3GPP system is EPS (Evolved Packet System). In EPS, the RAN is called E-UTRAN and the CN is called Evolved Packet Core (EPC). E-UTRAN is specified in particular in 3GPP TS 36.300. E-UTRAN comprises eNodeBs (eNB) connected to the EPC by means of the S1 interface, more specifically to the MME (Mobility Management Entity) by means of the S1-MME interface and to the S-GW (Serving Gateway) by means of the S1-U interface. The eNBs can be interconnected with each other by means of the X2 interface.

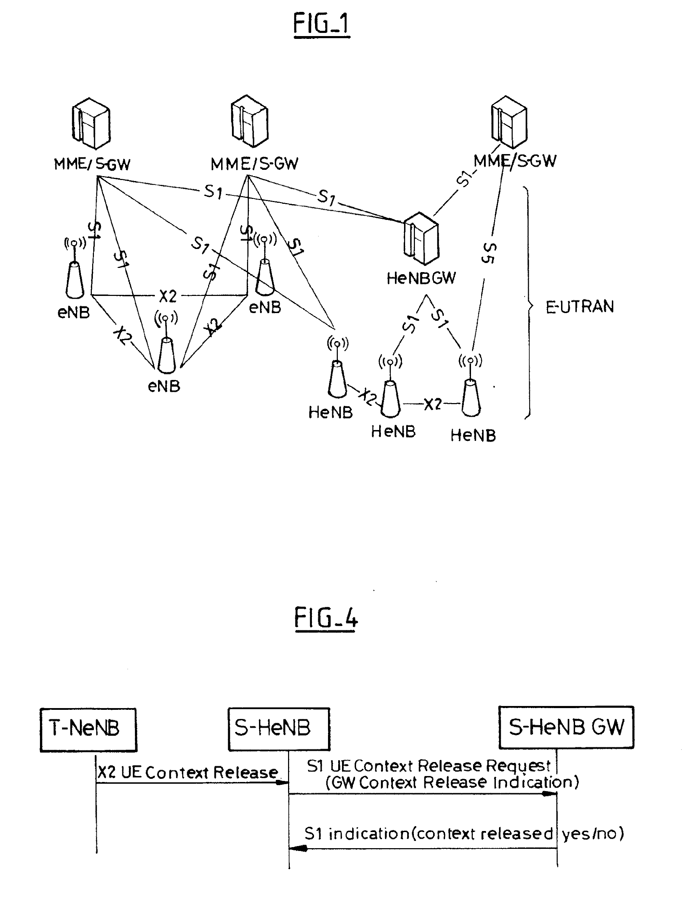

Femto cell technology is now introduced in such systems, and is specified in particular in 3GPP TS 36.300 for EPS. In EPS, the femto cell technology introduces a new equipment called Home eNodeB (HeNB). HeNB is a customer-premises equipment that connects a 3GPP UE over E-UTRAN wireless interface to a mobile operator's network using a broadband IP backhaul. An Home eNB Gateway (HeNB GW) is a mobile operator's equipment (usually physically located on mobile operator premises) through which the H(e)NB gets access to mobile operator's core network. E-UTRAN architecture may deploy an HeNB GW to allow the S1 interface between the HeNB and the EPC to support a large number of HeNBs in a scalable manner. The HeNB GW serves as a concentrator for the control plane, specifically the S1 -MME interface. An example of overall E-UTRAN architecture with deployed HeNB GW is recalled in figure 1 taken from 3GPP TS 36.300.

Intra-E-UTRAN handover procedures, including X2-based handover procedures and S1-based handover procedures, are specified in particular in 3GPP TS 36.300. The direct HeNB-HeNB handover based on X2 has been specified in release 10 of 3GPP.

There is a need to improve intra-E-UTRAN handover procedures in E-UTRAN architecture supporting HeNBs with deployed HeNB GW. In particular, there is a need to reduce HeNB GW signalling overhead, due to the large number of HeNBs that may be introduced within E-UTRAN.

Embodiments of the present invention in particular address such needs. Embodiments of the present invention are not limited to E-UTRAN, and could also be used in RANs (whether 3GPP or non-3GPP) other than E-UTRAN. In order to cover such different cases, the term Home Base station (HBS) will also be used as a more general term than Home eNodeB (HeNB), and the term Home Base station Gateway (HBS GW) will also be used as a more general term than Home eNodeB Gateway(HeNB GW).

These and other objects are achieved, in one aspect, by a method for enhanced handover procedure in a Radio Access Network RAN architecture supporting Home Base Stations HBS with deployed Home Base Station Gateway HBS GW, said method comprising at least one step of said handover procedure which is based on indication, to a source HBS connected to an HBS GW, whether a User Equipment UE context stored in said HBS GW is released or not at handover of said UE from said source HBS to a target HBS.

These and other objects are achieved, in other aspects, by E-UTRAN (or more generally RAN) entities, such as in particular Home eNodeB (or more generally Home Base Station) and Home eNodeB Gateway (or more generally Home Base Station Gateway), comprising means for performing such method.

Some embodiments of apparatus and/or methods in accordance with embodiments of the present invention are now described, by way of example only, and with reference to the accompanying drawings, in which:
- Figure 1 is intended to recall an example of E-UTRAN architecture supporting HeNBs with deployed HeNB GW,
- Figure 2 is intended to illustrate some steps of an X2-based handover procedure according to embodiments of the present invention, for the case of a serving HeNB and a target HeNB connected to a same HeNB GW,
- Figure 3 is intended to illustrate some steps of an X2-based handover procedure according to embodiments of the present invention, for the case of a serving HeNB and a target HeNB not connected to a same HeNB GW,
- Figure 4 is intended to illustrate an example of signaling exchange between HeNB and HeNB GW according to embodiments of the present invention.

In the following, embodiments of the present invention will more particularly be described, by way of example, for the case of 3GPP E-UTRAN. However, the present invention is not limited to such case, and could also be used in RANs (whether 3GPP or non-3GPP) other than E-UTRAN.

Also, in the following, embodiments of the present invention will more particularly be described, by way of example, for the case of X2-based handover. However, the present invention is not limited to such case, and could also be used for the case of S1-based handover.

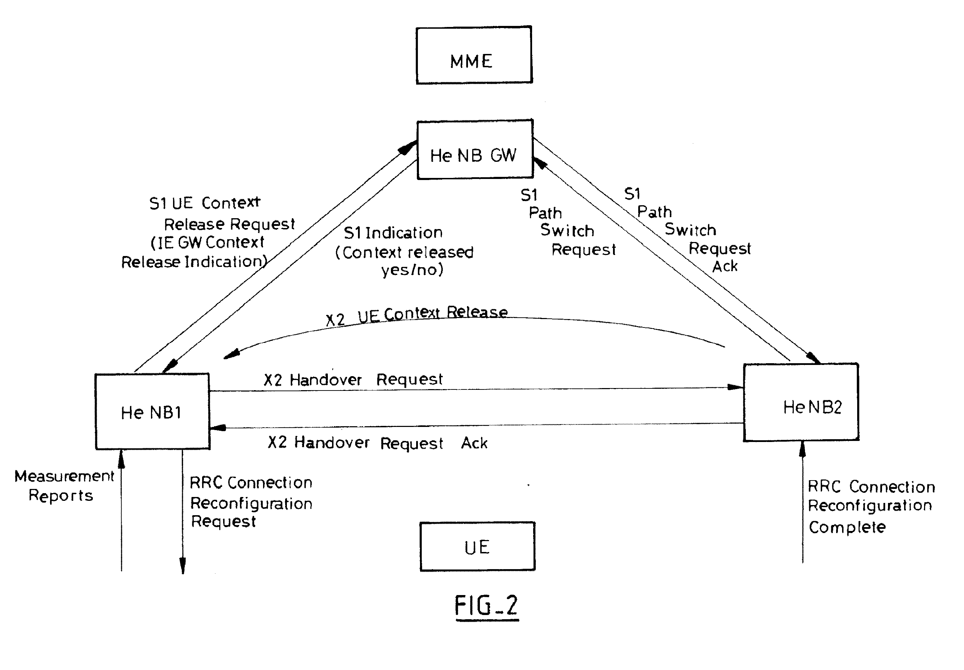

Some steps of an X2-based handover procedure are illustrated in figure 2 for the case of a source HeNB (noted HeNB1) and a target HeNB (noted HeNB2) connected to a same HeNB GW:
- A handover decision from HeNB1 to HeNB2 is made by HeNB1, based in particular on measurement reports sent by the UE to HeNB1 over the radio interface.
- HeNB1 then sends a X2 Handover Request message to HeNB2. HeNB2 then allocates resources for said handover. HeNB2 then sends a X2 Handover Request Acknowledge message to HeNB1.
- HeNB1 then sends a Handover Command (received from HeNB2 in the X2 Handover Request Acknowledge message) in a RRC Connection Reconfiguration Request to the UE.
- Once the UE is synchronized with HeNB2, the UE sends a Handover Confirmation in a RRC Connection Reconfiguration Complete message over the radio interface to HeNB2. HeNB2 then sends a S1 Path Switch Request message, and receives in response a S1 Path Switch Request Acknowledge message.
- Once HeNB2 has received the S1 Path Switch Request Acknowledge message, HeNB2 sends a X2 UE Release message to HeNB1.
- Once HeNS1 has received the X2 UE Release message, HeNS1 sends a S1 UE Context Release message with an Information Element (IE) GW Context Release Indication.

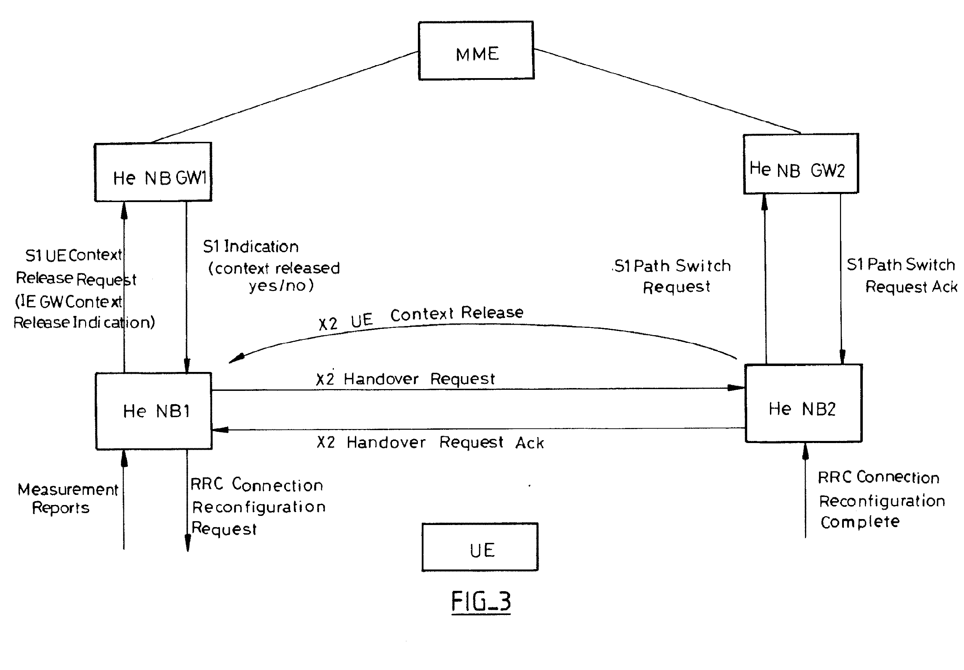

Some steps of an X2-based handover procedure are illustrated in figure 3 for the case of a source HeNB (noted HeNB1) connected to a source HeNB GW noted HeNB GW1, and a target HeNB (noted HeNB2) connected to a target HeNB GW noted HeNB GW2.

Similar steps as in figure 2 can be provided in figure 3, except that, in figure 3, the S1 Path Switch Request message and the S1 Path Switch Request Acknowledge message are exchanged between HeNB2 and HeNB GW2, whereas the S1 UE Release Request message with an Information Element (IE) GW Context Release Indication is still sent by HeNB1 to He NB GW1.

Thus, as currently specified by 3GPP, when an X2 handover is used between HeNBs and when the source HeNB is connected to a HeNB GW, a UE CONTEXT RELEASE REQUEST message including an explicit GW Context Release Indication is sent by the source HeNB, in order to indicate that the HeNB GW may release all the resources related to the UE context.

Thus, as currently specified by 3GPP, the source HeNB always sends at the end of the X2 handover procedure an S1 UE Context Release Request message with a special "GW Context Release indication" IE (Information Element). so that the HeNB GW can check if it needs to release its UE Context.

As recognized by the inventor, such procedure as currently specified by 3GPP is not optimum or raises problems, which may be explained for example as follows.

As illustrated in figures 2 and 3, the direct X2 handover can happen between two HeNBs which connect to the same HeNB GW or to two different HeNB GWs.

When the target HeNB connects to another HeNB GW than the source HeNB, or connects directly to the MME, it may be necessary to release the UE context in the source HeNB GW. Otherwise there will be thousands of hanging contexts and unreusable identifers.

However, one problem with the X2-based procedure as currently specified by 3GPP is that this creates a huge bunch of S1 signalling overhead because the S1 UE Context Release Request message with a "GW Context Release indication" IE is sent for each and every UE HeNB-HeNB mobility and for all HeNBs under the HeNB GW, whereas actually in 99.9 % of cases the two HeNBs connect to the same HeNB GW and there is no need to release the UE context in the HeNB GW.

A possible solution to remove this extra signalling could be as follows.

The target HeNB GW adds a special process during the S1 Path Switch Request message whereby it checks if the UE is coming from another HeNB GW. If yes the target HeNB GW will add an extra IE in the S1 Path Switch Request Acknowledge message to inform that the UE context release is needed in source HeNB GW. This extra IE is further propagated back to the source HeNB in the X2 UE Context Release message. Upon receiving this X2 UE Context Release message, the source HeNB would only trigger the S1 UE Context Release Request message to the source HeNB GW (with GW Context Release Indication) if the extra IE is contained.

However, as also recognized by the inventor, such possible solution would have a number of drawbacks, in particular:
- it introduces a new check at every X2 handover in the target HeNB GW
- it introduces also signalling overhead in two messages: S1 Path Switch Request Acknowledge and X2 UE Context Release messages
- this extra check and extra signalling happen again for each and every HeNB-HeNB mobility and for all HeNBs which makes this solution not better than the current situation
- finally, this solution has a backwards compatibility problems because if the source HeNB GW is from an earlier version - i.e. as per current behaviour- it will redundantly perform the check whether UE context needs to be released or not while no more needed due to the previous target HeNB GW check.

Embodiments of the present invention in particular enable to solve above-mentioned problems or to avoid above mentioned drawbacks.

In an embodiment, the source HeNB GW checks whether it is needed or not to release its UE Context (such as by checking if the UE has or not left the source HeNB GW), in other words the checking is kept in source HeNB GW (backwards compatible).

In an embodiment, the source HeNB GW simply sends an indication back to the source HeNB to indicate if it has decided to release the context or not. In the example illustrated in figures 2 and 3, such indication is sent in a message noted "S1 indication (context released Yes/No". In the example illustrated in figure 2, this message "S1 Indication (context released Yes/No" may indicate that the UE context has not been released, whereas in the example illustrated in figure 3, this message "S1 Indication (context released Yes/no" may indicate that the UE context has been released.

In an embodiment, based on this new indication, the source HeNB can determine whether the target HeNB is connected to same HeNB GW as the source HeNB or not, and can keep track of this information i.e. for all subsequent X2 handover towards that target HeNB (that connects to the same HeNB GW) it will not send any more an S1 UE Context Release message (with GW Context Release Indication).

In other words, in an embodiment, the S1 UE Context Release Request message (with GW Context Release Indication) is sent only for the first mobility to a target HeNB and not again which removes the signalling overhead problem.

Considering that a HeNB has typically maximum one or two tens of HeNB neighbours, a maximum of 20 S1 UE Context Release Request messages (with GW Context Release Indication) will ever be sent in total.

In an embodiment, this new indication sent from the source HeNB GW to the source HeNB can be introduced as part of an existing S1 message or a new message.

In an embodiment, as illustrated in figure 4, when the source HeNB receives the X2 UE Context Release message, it generates the S1 UE Context Release Request message to the source HeNB GW including the GW Context Release Indication as per current behaviour.

The HeNB GW may release the UE context if it determines that the UE identified by the received UE S1AP IDs is no longer served by an HeNB attached to it.

In an embodiment, the HeNB GW checks if the UE is no longer served by an HeNB connected to it by checking if the HeNB GW has received the S1 Path Switch Request message when it receives the S1 UE Context Release Request message with GW Context Release Indication.

In an embodiment, after its check, the source HeNB GW may indicate whether it has released the UE context or not to the source HeNB for that UE

The source HeNB may infer from that whether the target HeNB is connected to same HeNB GW or not and remembers it for subsequent handovers. If that target HeNB is connected to the same HeNB GW, the source HeNB will not send again, after X2 direct handover, the S1 UE Context Release Request message with GW Context Release Indication.

In another embodiment, the source HeNB GW may indicate explicitly whether or not the source HeNB should send again the S1 UE Context Release Request message with GW Context Release Indication for a particular target HeNB.

In another embodiment, the source HeNB GW may indicate whether or not the target HeNB is connected to the same HeNB GW as the source HeNB.

In an embodiment, the source HeNB stores this new indication (thus received from the HeNB GW at a first handover to a target HeNB), and retrieves this stored indication at a subsequent handover to this target HeNB.

Embodiments of the present invention allow to drastically reduce the signalling between the source HeNB and the source HeNB GW for the X2 based handover between HeNBs. This type of handover is to be used very frequently in mall and enterprise deployments but also in hetnet deployments

A solution according to embodiments of the present invention is far better than the possible solution presented above, which also creates per UE mobility signalling overhead and creates other problems.

In contrast, embodiments of the present invention leverage the fact that there is no S1 flex between a HeNB and a HeNB GW and therefore all UE signalling originating from a HeNB always go via the same HeNB GW. Hence, the indication by source HeNB GW to the source HeNB of whether the HeNB GW has changed or not for one particular UE mobility will make it applicable for all subsequent UEs and UE mobility.

In one aspect, there is provided a method for enhanced handover procedure in a Radio Access Network RAN architecture supporting Home Base Stations HBS with deployed Home Base Station Gateway HBS GW, said method comprising, in an embodiment, at least one step of said handover procedure which is based on an indication, to a source HBS connected to an HBS GW, whether a User Equipment UE context stored in said HBS GW has been released or not at handover of said UE from said source HBS to a target HBS.

In an embodiment, said indication includes at least one of:
- an indication of an HBS GW decision whether or not said UE context has been released,
- an indication whether said target HBS is connected or not to the same HBS GW as said source HBS,
- an indication whether or not said source HBS has to indicate to said HBS GW that a subsequent handover from said source HBS to said target HBS has been successfully performed.

In an embodiment, said method comprises a step of:
- said HBS GW sending said indication to said source HBS.

In an embodiment, said method comprises a step of:
- said source HBS storing said indication.

In an embodiment, said method comprises a step of:
- said source HBS retrieving a stored indication at a subsequent handover from said source HBS to said target HBS.

In an embodiment, said method comprises a step of:
- said HBS GW sending said indication to said source HBS, further to the reception from said source HBS of an indication that said handover from said source HBS to said target HBS has been successfully performed.

In an embodiment, said method comprises a step of:
- said source HBS indicating to said HBS GW that a subsequent handover from said source HBS to said target HBS has been successfully performed, only if said indication is an indication that an UE context has been released.

In an embodiment, said method comprises a step of:
- in a RAN corresponding to E-UTRAN, a HBS GW corresponding to HeNB GW sending said indication to a source HBS corresponding to a source HeNB, via S1 signalling.

In an embodiment, said method comprises a step of:
- in a RAN corresponding to E-UTRAN, a HBS GW corresponding to HeNB GW sending said indication to a source HBS corresponding to a source HeNB, via S1 signalling, either in a new message or in a new element of an existing message

In an embodiment, said method comprises a step of:
- in a RAN corresponding to E-UTRAN, a HBS GW corresponding to HeNB GW sending said indication to a source HBS corresponding to a source HeNB, upon reception, of a S1 UE Context Release message with an Information Element GW Context Release Indication.

Other aspects relate to E-UTRAN (or more generally RAN) entities, such as in particular Home eNodeB (or more generally Home Base Station) and Home eNodeB Gateway (or more generally Home Base Station Gateway), comprising means for performing such method.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for enhanced handover procedure in a Radio Access Network RAN architecture supporting Home Base Stations HBS with deployed Home Base Station Gateway HBS GW, said method comprising at least one step of said handover procedure which is based on an indication, to a source HBS connected to an HBS GW, whether a User Equipment UE context stored in said HBS GW has been released or not at handover of said UE from said source HBS to a target HBS.

2. A method according to claim 1, wherein said indication includes at least one of:
- an indication of an HBS GW decision whether or not said UE context has been released,
- an indication whether said target HBS is connected or not to the same HBS GW as said source HBS,
- an indication whether or not said source HBS has to indicate to said HBS GW that a subsequent handover from said source HBS to said target HBS has been successfully performed.

3. A method according to claims or 2, comprising a step of:
- said HBS GW sending said indication to said source HBS.

4. A method according to any of claims 1 to 3, comprising a step of:
- said source HBS storing said indication.

5. A method according to any of claims 1 to 4, comprising a step of:
- said source HBS retrieving a stored indication at a subsequent handover from said source HBS to said target HBS.

6. A method according to any of claims 1 to 5, comprising a step of:
- said HBS GW sending said indication to said source HBS, further to the reception from said source HBS of an indication that said handover from said source HBS to said target HBS has been successfully performed.

7. A method according to any of claims 1 to 6, comprising a step of:
- said source HBS indicating to said HBS GW that a subsequent handover from said source HBS to said target HBS has been successfully performed, only if said indication is an indication that an UE context has been released.

8. A method according to any of claims 1 to 7, comprising a step of:
- in a RAN corresponding to E-UTRAN, a HBS GW corresponding to HeNB GW sending said indication to a source HBS corresponding to a source HeNB, via S1 signalling.

9. A method according to any of claims 1 to 8, comprising a step of:
- in a RAN corresponding to E-UTRAN, a HBS GW corresponding to HeNB GW sending said indication to a source HBS corresponding to a source HeNB, via S1 signalling, either in a new message or in a new element of an existing message

10. A method according to any of claims 1 to 9, comprising a step of:
- in a RAN corresponding to E-UTRAN, a HBS GW corresponding to HeNB GW sending said indication to a source HBS corresponding to a source HeNB, upon reception, of a S1 UE Context Release message with an Information Element GW Context Release Indication.

11. A RAN entity, comprising means for performing a method according to any of claims 1 to 10.

12. A Home Base Station HBS, in particular Home eNodeB HeNB, comprising means for performing a method according to any of claims 1 to 10.

13. A Home Base Station Gateway HBS GW, in particular Home eNodeB Gateway HeNB GW, comprising means for performing a method according to any of claims 1 to 10.
